# EUROPEAN PATENT APPLICATION

(11) **EP 0 985 806 A2**
(43) Date of publication of application: **15.03.2000**
(21) Application number: 99307070.5
(22) Date of filing: 06.09.1999
(51) Int. Cl.: F01L 3/10

(54) **Valve spring retainer and method of machining the retainer**

(30) Priority: 09.09.1998 JP 25509198; 09.08.1999 JP 22544099
(71) Applicant: FUJI OOZX INC., Fujisawa-shi, Kanagawa-ken (JP)
(72) Inventor: Hara, Nobuo, Fuji Oozx Inc., Fujisawa-shi, Kanagawa-ken (JP); Abe, Makoto, Fuji Oozx Inc., Fujisawa-shi, Kanagawa-ken (JP)
(74) Representative: Ben-Nathan, Laurence Albert

(57) **Abstract**

A valve spring retainer is provided in a valve operating mechanism of an internal combustion engine. The valve spring retainer comprises a tubular portion and a spring-retaining flange for retaining a valve spring. Load is applied to a corner between the tubular portion and the spring- retaining flange to produce residual compressive stress, thereby strengthening the corner.

## Description

### BACKGROUND OF THE INVENTION

The present invention relates to a valve spring retainer used in a valve operating mechanism of an internal combustion engine, and a method of machining it.

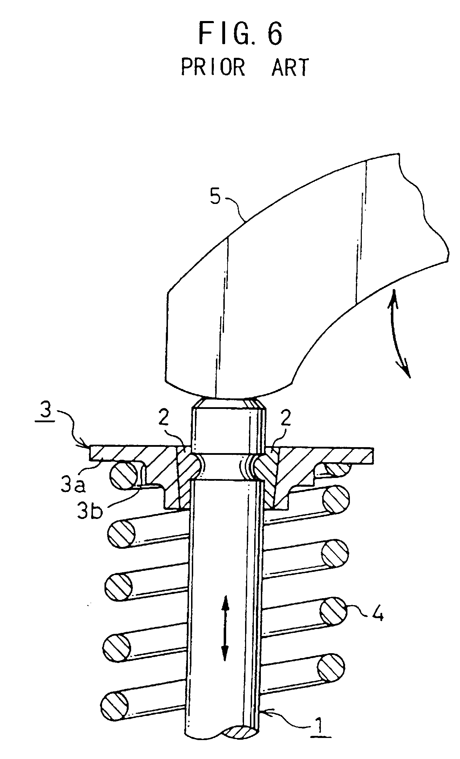

Fig. 6 illustrates one embodiment of a valve operating mechanism in an internal combustion engine, in which a valve spring retainer 3 is fixed at the upper end of a poppet valve 1 via a pair of semi-cylindrical cotters 2,2.

Between the lower surface of a spring-retaining flange 3a of the valve spring retainer 3 and a cylinder head (not shown), a valve spring 4 is provided, and upward force is applied any time to the poppet valve 1 via the valve spring retainer 3. A rocker arm 5 is engaged on the upper end of the poppet valve 1, and is moved up and down by a rotary cam (not shown) to make opening/closing operation of the poppet valve 1.

Recently, to decrease inertial mass of a valve operating mechanism, the spring retainer 3 is made of Al alloy instead of steel. Al alloy valve spring retainer is generally manufactured by cold forging, T6 treatment under Japanese Industrial Standards (JIS) and mechanical finishing process.

Al alloy valve spring retainer has lower mechanical strength than steel one, and only T6 treatment did not satisfy fatigue strength which is required for a valve spring retainer.

To the corner 3b of the spring retaining flange 3a of the valve spring retainer 3, larger upward tensile stress repeatedly acts by the valve spring 4. Therefore, Al alloy spring retainer is likely to cause fatigue failure at the corner 3b.

To overcome the problem, it is suggested to make thicker spring-retaining flange 3a or increase R value or radius of curvature of the corner 3b, but it is contrary to lightening the valve spring retainer and limit flexibility in design of the valve operating mechanism.

### SUMMARY OF THE INVENTION

In view of the disadvantage in the prior art, it is an object of the present invention to provide a valve spring retainer in which fatigue strength is increased at a corner between a spring-retaining flange and a tubular portion of the valve spring retainer without making the spring-retaining flange thicker or increasing a radius of curvature of the corner.

It is another object of the present invention to provide a method of machining such a valve spring retainer.

### BRIEF DESCRIPTION OF THE DRAWINGS

The features and advantages of the present invention will become more apparent from the following description with respect to embodiments as shown in appended drawings wherein:
Fig. 1 is a central vertical sectional front view of a valve spring retainer of the present invention;
Fig. 2 is a central vertical sectional front view which illustrates a method of machining the valve spring retainer according to the present invention;
Fig. 3 is a vertical sectional front view which illustrates a method of machining by a pressing tool according to the present invention;
Fig. 4 is a vertical sectional view which illustrates a method of machining by a pressing roller according to the present invention;
Fig. 5 is a vertical sectional view which illustrates a method of machining by a pressing roller with increased radius of curvature of a corner; and
Fig. 6 is a central vertical sectional view of a conventional valve spring retainer and a valve operating mechanism in whch the present invention is applied.

### DETAILED DESCRIPTION OF PREFERED EMBODIMENTS

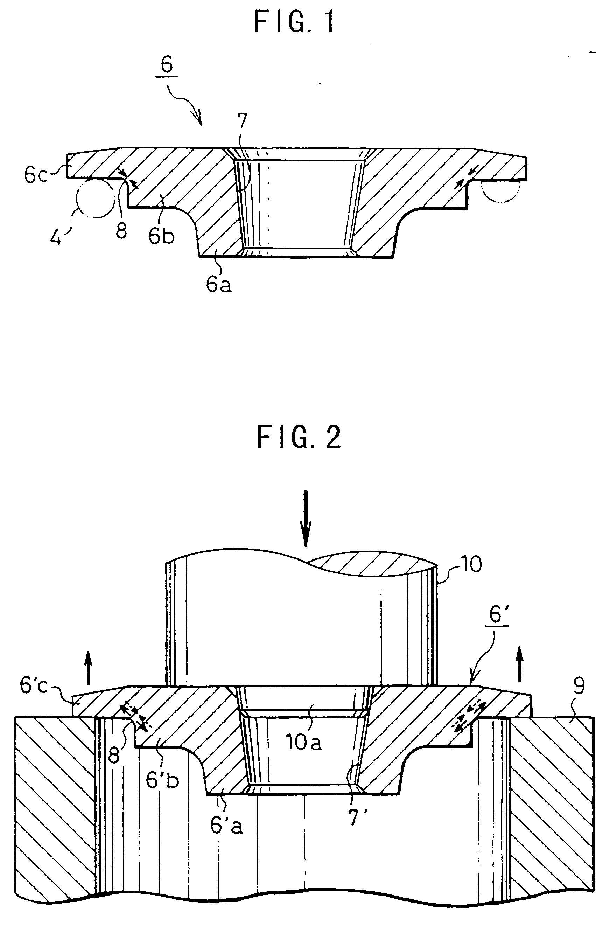

Fig. 1 illustrates an Al alloy spring retainer 6 according to the present invention, made of Al alloy such as Al-Si and Al-Cu alloy, comprising an inner tubular portion 6a which has a tapered bore 7 into which a cotter (not shown) fits, an outer tubular portion 6b and a spring-retaining flange 6c for retaining a valve spring 4. The spring-retaining flange 6c is thinner than the outer tubular portion 6b, which is thinner than the inner tubular portion 6a.

Residual compressive stress is produced in a tangential direction at an arcuate corner 8 between the spring-retaining flange 6c and the outer tubular portion 6b. The valve spring retainer 6 is machined as below.

Cold forging is applied to Al alloy material to make a valve spring retainer almost the same form as a valve spring retainer to be manufactured, and then, T6 treatment under Japanese Industrial Standards is applied to strengthen the whole body. T6 treatment comprises the steps of heating material at about 500°C for several hours, cooling it rapidly by water quenching and, then, heating it at 100 to 200°C for several hours.

Then, as shown in Fig. 2, after T6 treatment, the lower surface near the outer circumference of the spring-retaining flange 6c is supported by a stationary tubular support 9. Then, a positioning tapered projection 10a of a punch 10 fits into the tapered bore 7, and the punch 10 of which an outer diameter is slightly smaller than that of the outer tubular portion 6b is engaged on the upper surface of the valve spring retainer 6, which is pressed under a certain load. Tension load is applied to the corner 8, which is plastically deformed, so that the corner 8 is elastically deformed in a direction of arrows.

In this condition, the punch 10 is raised and pressing load is released, so that residual compressive stress is produced in an direction as shown by dotted arrows to recover the portion elastically deformed in a direction of the arrows. When residual compressive stress is produced at the corner 8 to increase allowable stress, thereby decreasing fatugue failure at the corner 8 even if it is repeatedly subjected to large load by the valve spring 4.

Comparative tests are carried out by the inventors to the corner 8 before and after residual compressive stress is produced. As a result, 10⁷ times fatigue failure load is 85 kgf before residual compressive stress is produced, while it increases to 130 kgf after residual compressive stress is produced.

Instead of the method in Fig. 2, residual compressive stress may be produced as below.

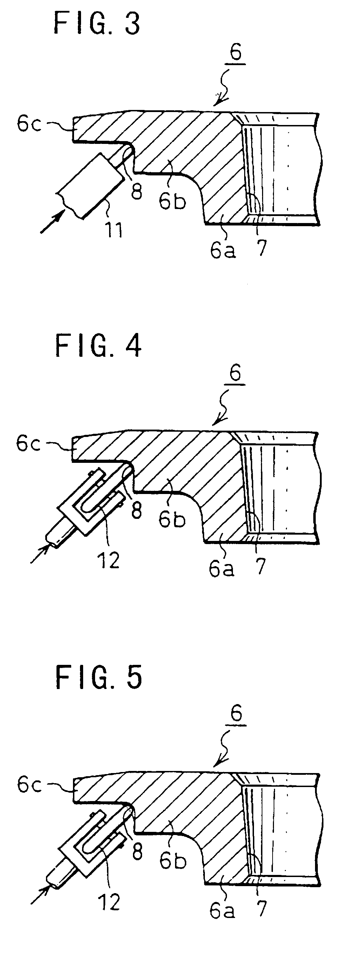

As shown in Figs. 3 and 4, the arcuate corner 8 is strongly pressed at 45° by a pressing tool 11 or a rotatable pressing roller 12 and is plastically deformed. After its surrounding organization is elastically deformed, pressing load is released and residual compressive stress is produced at the corner 8.

Shot peening may be carried out to the corner to produce residual compressive stress.

As shown in Fig. 5, at the corner 8, there is formed an arcuate surface which has slightly larger radius of curvature than that of the final product, and after T6 treatment, the corner 8 is plastically deformed by the pressing roller 12 to make radius of curvature which is corresponding to that of the final product. Thus, residual compressive stress is produced at the corner. Pressing may be made by die forging instead of the roller 12.

The present invention is also applied to Ti or Mg alloy valve spring retainer as well as Al alloy valve spring retainer.

The foregoing merely relates to embodiments of the present invention. Various changes and modifications may be person skilled in the art without departing from the scope of claims wherein:

## Claims

1. A valve spring retainer in an internal combustion engine, said valve spring retainer comprising a tubular portion; and a spring retaining flange which retains an upper end of a valve spring, residual compressive stress being produced at a corner between said tubular portion and said spring retaining flange.

2. A valve spring retainer as defined in claim 1 wherein said tubular portion comprises an inner tubular portion and an outer tubular portion which is thinner than said inner tubular portion, said corner being provided between said outer tubular portion and said spring-retaining flange.

3. A method of machining a valve spring retainer which comprises a tubular portion and a valve-retaining flange, said method comprising:
deforming a corner between said tubular portion and said valve-retaining portion plastically by load; and
removing said load to produce residual compressive stress at said corner.

4. A method as defined in claim 3 wherein said tubular portion comprises an inner tubular portion and an outer tubular portion which is thinner than said inner tubular portion, said corner being provided between said outer tubular portion and said spring-retaining flange.

5. A method as defined in claim 3, further comprising, before deforming said corner plastically, molding said valve spring retainer from Al alloy and applying T6 treatment under Japanese Industrial Standards, that is to say, heating said retainer at about 500°C for several hours, cooling it rapidly by water quenching and then heating it at 100 to 200°C for several hours.

6. A method as defined in claim 5 wherein the step of deforming the corner plastically comprises supporting a lower surface of a circumference of the spring-retaining flange by a circumference of a tubular support, and pressing an upper surface of the tubular portion downwards to deform the corner plastically.

7. A method as defined in claim 6 wherein the upper surface of the tubular portion is pressed downwards by a punch.

8. A method as defined in claim 7 wherein said punch has a lower projection which fits in a tapered bore of the tubular portion of the valve spring retainer.

9. A method as defined in claim 7 wherein the step of removing a load comprising raising the punch to leave the upper surface of the valve spring retainer.

10. A method as defined in claim 3 wherein said step of deforming the corner plastically comprising pressing the corner by a pressing tool.

11. A method as defined in claim 3 wherein said step of deforming the corner plastically comprises pressing the corner by a rotatable pressing roller.

12. A method as defined in claim 3 wherein said step of deforming the corner plastically comprises forming a surface of the corner to a slightly larger radius of curvature than that of a final product, applying T6 treatment to the valve spring retainer, and pressing the corner by a pressing roller to deform the corner plastically.
